# EUROPÄISCHE PATENTSCHRIFT

(11) **EP 2 214 797 B1**
(45) Veröffentlichungstag und Bekanntmachung des Hinweises auf die Patenterteilung: **02.10.2013**
(21) Anmeldenummer: 08874459.4
(22) Anmeldetag: 19.11.2008
(51) Int. Cl.: B01D 3/00, B01D 3/14, B01J 19/32

(54) **VORRICHTUNG UND VERFAHREN ZUR GEWINNUNG HOCHREINER PRODUKTE AUS EINEM KOLONNENABZUG**
DEVICE AND METHOD FOR OBTAINING HIGHLY PURE PRODUCTS FROM A COLUMN EXTRACTOR
DISPOSITIF ET PROCÉDÉ POUR OBTENIR DES PRODUITS TRÈS PURS À PARTIR D UN SOUTIRAGE DE COLONNE

(30) Priorität: 23.11.2007 EP 07121420
(43) Veröffentlichungstag der Anmeldung: 11.08.2010
(73) Patentinhaber: BASF SE, 67056 Ludwigshafen (DE)
(72) Erfinder: FRIESE, Thorsten, 68199 Mannheim (DE); BECHTEL, Marcus, 69123 Heidelberg (DE); GERBER, Bernd, 67069 Ludwigshafen (DE); PASCHOLD, Jürgen, 67691 Hochspeyer (DE)
(86) Internationale Anmeldenummer: PCT/EP2008/065808
(87) Internationale Veröffentlichungsnummer: WO 2009/143907

(56) Entgegenhaltungen:
- EP-A- 0 684 060
- EP-A- 0 842 686
- EP-A- 1 256 379
- EP-A- 1 378 282
- WO-A-99/01215
- DE-A1- 10 352 294
- US-A- 5 464 573

## Beschreibung

Die vorliegende Erfindung betrifft einen Flüssigkeitssammler nach Anspruch 1 oder 2 zum Einsatz in einer Kolonne, die mindestens ein Packungsbett enthält, umfassend eine Sammeleinrichtung zum Sammeln der aus dem Packungsbett laufenden Flüssigkeit und mindestens einen Abzug aus der Kolonne. Weiterhin betrifft die Erfindung eine Kolonne zur Trennung von Stoffgemischen, die mindestens ein Packungsbett sowie mindestens einen Flüssigkeitssammler und Abzug enthält. Des Weiteren betrifft die Erfindung ein Verfahren zum Abtrennen einer oder mehrerer Komponenten aus einem Stoffgemisch, welches man mindestens einer Kolonne zur Abtrennung zuleitet, wobei mindestens eine Kolonne ein oder mehrere Packungsbetten enthält. Die Erfindung umfasst auch Kombinationen im Folgenden beschriebener bevorzugter Ausführungsformen.

In der thermischen Trenntechnik versteht man unter Kolonnen, insbesondere Destillationskolonnen, mehrstufige Trennapparate, in denen Stofftrennung durch intensiven Kontakt von flüssiger und gasförmiger Phase stattfindet. Die flüssige Phase läuft dabei von oben nach unten durch die Kolonne, die Gasphase steigt von unten nach oben durch die Kolonne. Durch geeignete Einbauten werden beide Phasen in Kontakt gebracht, womit Stoffaustausch ermöglicht und ein Aufreinigungseffekt erzielt wird. Die leichtsiedenden Komponenten reichern sich am Kolonnenkopf an, die schwersiedenden Komponenten im Sumpf der Kolonne. Im mittleren Teil der Kolonne liegen die Mittelsieder aufkonzentriert vor.

Je nach Stoffeigenschaften und Phasengleichgewicht ist es möglich, auch den Mittelsieder aufkonzentriert mittels eines Seitenabzugs zu erhalten. Üblicherweise erfolgen Seitenentnahmen im Verstärkungsteil, also dem oberhalb des Zulaufs befindlichen Teil einer Destillationsvorrichtung in flüssiger Form, wobei der Seitenstrom noch durch Anteile an leichter siedenden Bestandteilen verunreinigt ist. Eine scharfe Trennung zwischen Mittelsiedern im Seitenabzug und Leichtsiedern im Kopf der Kolonne ist nur unter sehr hohem Aufwand realisierbar. Seitenabzüge können auch dampfförmig ausgeführt werden, dann üblicherweise im Abtriebsteil, also dem unterhalb des Zulaufs befindlichen Teil der Kolonne. Auch hierbei findet selten eine scharfe Trennung zwischen Mittelsiedern im Seitenstrom und Hochsiedern im Sumpf der Kolonne statt, sodass der dampfförmige Produktstrom aus dem Seitenabzug typischerweise noch Anteile der hoch siedenden Komponenten enthält.

Neben Bodenkolonnen finden in der thermischen Trenntechnik Packungskolonnen vielfältige Anwendungen. Um die aus den Packungsbetten laufende Flüssigkeit aufzunehmen, kommen Flüssigkeitssammler zum Einsatz. In den meisten Anwendungsfällen wird die gesammelte Flüssigkeit einem so genannten Flüssigkeitsverteiler zugeführt, der für eine gezielte Verteilung der Flüssigkeit auf ein darunter liegendes Packungsbett sorgt. Bei Packungskolonnen, die über einen Seitenabzug verfügen, wird oftmals ein Teil der im Flüssigkeitssammler aufgefangenen Flüssigkeit durch einen Abzug aus der Kolonne geführt.

Die europäische Patentanmeldung EP 0 842 686 A1 offenbart eine Destillationsanlage mit einer Wärmepumpe. Im Abtriebsteil der Kolonne wird Flüssigkeit in einer Sammel-einrichtung gesammelt und ein Teil der gesammelten Flüssigkeit in einem Seitenabzug der Kolonne entnommen. Der entnommene Strom wird über zwei Verdampfer in einen Dampfstrahlverdichter geleitet, von wo aus er als Strippdampf der Kolonne wieder zugeführt wird.

Um die Reinheit einer aus einem Seitenabzug erhaltenen Komponente zu steigern, wird häufig in einen Teil der Kolonne eine im Wesentlichen senkrechte Trennwand eingebaut. Üblicherweise haben solche Trennwandkolonnen einen gemeinsamen Kolonnenkopf und Kolonnensumpf, sind im mittleren Teil der Kolonne aber aufgeteilt in eine Zone für den Zulauf und eine Zone, in der typischerweise der Seitenabzug angebracht ist. Es existieren allerdings auch Trennwandkolonnen, bei denen sich die Trennwand bis zum Kopf oder bis zum Sumpf erstreckt. Weiterhin sind Kolonnen mit mehreren Trennwänden und mehreren Seitenabzügen bekannt.

In der Patentanmeldung EP 1 378 282 A1 wird eine derartige Trennwandkolonne beschrieben, bei der im geteilten Abschnitt auf einer Seite der Trennwand ein Zulauf und auf der anderen Seite ein Seitenabzug vorgesehen sind. In einer Ausgestaltung ist die Sammeleinrichtung, die einen Ringkanal umfasst, als Komplettbauteil vorgefertigt und weist an ihrem oberen Ende einen Ringflansch auf, der beim Zusammenbau der Kolonne vollumfänglich und dichtend mit dem Kolonnenrand und der Trennwand verbunden wird.

Die Anmeldung DE 100 04 311 A1 ist mit dem Problem befasst, hochreines Ammoniak im Seitenabzugs einer Destillationskolonne zu erhalten. Bei diesem speziellen Trennproblem ist es günstig, den Seitenabzug dampfförmig auszuführen. Dabei muss verhindert werden, dass Anteile des Hochsieders in das Seitenprodukt gelangen. Das Problem wird dadurch gelöst, dass Tropfenabscheider vor oder in dem Seitenabzug angebracht werden.

Möglichkeiten der Realisierung flüssiger Seitenabzüge oder auch Sumpfabzüge sind beispielhaft in dem Buch "Henry Z. Kister: Distillation Operation, McGraw-Hill, 1990" beschrieben. Sumpfprodukte können demnach direkt aus dem Sumpf der Kolonne oder aus einer Auffangeinrichtung oberhalb der im Sumpf befindlichen Flüssigkeit abgezogen werden (S. 96/97). Für den Seitenabzug flüssiger Produkte aus Bodenkolonnen finden Einrichtungen In oder unterhalb der Ablaufschächte Verwendung (S. 112). Eine Alternative stellen Kaminböden (S. 103/104) dar, die auch in Packungskolonnen als Flüssigkeitssammler eingesetzt werden können. Eine weitere, weit verbreitete Möglichkelt, die Flüssigkeit aus Packungsbetten zu sammeln, sind sogenannte "Chevron-Sammler" (S. 114/115). Bei dieser Art von Flüssigkeitssammler sind Fangbleche in einem Winkel zur Senkrechten so angeordnet, dass, in die Querschnittsebene proji-ziert, nahezu die gesamte Querschnittsfläche der Kolonne bedeckt ist. Am unteren Ende münden die schrägen Fangbleche in einer Auffangeinrichtung, die ihrerseits die aufgefangene Flüssigkeit in einen Kanal, beispielsweise einen umlaufenden Ringkanal, abführt. Der Ringkanal ist typischerweise an der Kolonnenwand angeschweißt (S. 212).

Das Dokument US 5,464,573 offenbart einen ähnlichen Flüssigkeitssammler mit schräg angeordneten Fangblechen. Die aufgefangene Flüssigkeit fließt in kanalförmige Schächte, deren Böden perforiert sind. Dadurch fungiert der Sammler gleichzeitig als Flüssigkeitsverteller. Ein Ringkanal ist bei diesem Sammler nur erforderlich, wenn ein Teil der gesammelten Flüssigkeit als Seitenabzug ausgeleitet werden soll.

Eine andere Bauart eines Flüssigkeitssammlers wird in der Anmeldung US 6,749,182 dargestellt. Bei dieser Ausführungsform wird die aus den Packungsbetten laufende Flüssigkeit mit Hilfe von im Wesentlichen waagrecht angeordneten Fangblechen von der Kolonnenwand zur Mitte der Kolonne geleitet und von einem Längskanal zur Ableitung aufgenommen.

Die deutsche Patentanmeldung DE 100 34 902 A1 sowie die deutsche Auslegeschrift DE 14 42 884 beschreiben Flüssigkeitssammler für Kolonnen zum Stoff- und/oder Wärmeaustausch, bei denen flügelförmige Fangbleche schräg zu einer gemeinsamen Ebene kreisförmig um eine Achse angeordnet sind. Die zu fangende Flüssigkeit wird in Richtung der Achse abgeleitet.

Beim Einsatz von Packungen zur Trennung von Stoffgemischen in einer Kolonne lässt es sich nicht vermeiden, dass ein Bruchteil der auf das Packungsbett aufgegebenen Flüssigkeit nicht vollständig durch das Packungsbett läuft, sondern an der Innenwand der Kolonne herabläuft. Dieses Phänomen wird auch als Randgängigkeit oder Wandgängigkeit bezeichnet. Untersuchungen an der Universität Delft ergaben für zwei unterschiedliche Packungen der Firma Montz (Montz Pak B1-250 und Montz Pak B1-250M) Randgängigkeiten bis maximal 3,8 % bzw. 2,4 %, abhängig von der gas- und flüssigseitigen Belastung der Kolonne (veröffentlicht in Chemical Engineering Research & Design, Vol. 84, Issue A10, Oct. 2006, S. 867-874). Die Randgängigkeit ist hier definiert als der Quotient aus dem an der Wand herablaufenden Massenstrom und dem auf das Packungsbett insgesamt aufgegebenen Massenstrom.

Der im Folgenden beschriebenen Erfindung lag die Aufgabe zugrunde, eine Vorrichtung und ein Verfahren zu entwickeln, mit Hilfe derer die Reinheit von Produktströmen, insbesondere flüssigen Produktströmen, aus Seitenabzügen und/oder Sumpfabzügen gesteigert werden kann. Von besonderem Interesse war eine Lösung für Kolonnen, die mit Packungen ausgestattet sind. Die Vorrichtung sollte konstruktiv einfach sein. Sie sollte sich zum Nachrüsten bestehender Kolonnen eignen. Darüber hinaus sollte sie in einer Vielzahl von Kolonnenkonfigurationen anwendbar sein. Ein weiterer Teilaspekt der Aufgabenstellung betraf die Entwicklung eines Verfahrens, um aus einem Stoffgemisch Komponenten abzutrennen, an die im Hinblick auf ihre weitere Verwendung hohe Reinheitsanforderungen gestellt werden.

Zur Lösung dieser Aufgabe wird ein Flüssigkeitssammler vorgeschlagen zum Einsatz in einer Kolonne, die mindestens ein Packungsbett enthält, umfassend
- eineSammeleinrichtung zum Sammeln der aus dem Packungsbett laufenden Flüssigkeit und
- mindestens einen Abzug aus der Kolonne,
wobei an der Wandung herablaufende Flüssigkeit nicht in den Abzug des Flüssigkeitssammlers gelangt.

Weiterhin wird eine Kolonne zur Trennung von Stoffgemischen vorgeschlagen, die mindestens ein Packungsbett enthält und mindestens einen erfindungsgemäßen Flüssigkeitssammler umfasst.

Daneben wird ein Verfahren zum Abtrennen einer oder mehrerer Komponenten aus einem Stoffgemisch vorgeschlagen, bei dem man das Stoffgemisch mindestens einer erfindungsgemäßen Kolonne zur Abtrennung zuleitet.

Ein Wesenszug der Stofftrennung in Kolonnen ist darin zu sehen, dass sich leichtsiedende Komponenten am Kopf, schwersiedende Komponenten im Sumpf und mittelsiedende Komponenten im mittleren Teil der Kolonne konzentrieren. Werden Packungen zur Trennung von Stoffgemischen in einer Kolonne eingesetzt, lässt es sich nicht vermeiden, dass ein Bruchteil der auf ein Packungsbett aufgegebenen Flüssigkeit nicht vollständig durch das Packungsbett läuft, sondern an der Wandung, beispielsweise der Innenwand der Kolonne oder an der gegebenenfalls eingebauten Trennwand, herabläuft. Der Vorteil der vorliegenden Erfindung besteht darin, dass bei der Gewinnung einer mittelsiedenden Fraktion eines Stoffgemisches durch einen flüssigen Seitenabzug die vom Kopf der Kolonne an der Wandung herablaufende Flüssigkeit keine leichtsiedenden Komponenten dem Seitenabzug mehr beimischt. Hierdurch wird dessen Reinheit unter Umständen erheblich erhöht. Der prinzipiell gleiche Vorteil zeigt sich bei der Gewinnung einer schwersiedenden Fraktion aus dem Sumpfabzug, wo leicht- und mittelsiedende Komponenten vom Sumpfabzug ferngehalten werden.

Dies wird erfindungsgemäß durch einen Flüssigkeitssammler erreicht, bei dem man
I) entweder die zum Sammeln der aus den Trennelementen laufenden Flüssigkeit bestimmten Elemente konstruktiv von der Kolonnenwand und gegebenenfalls Trennwand trennt, oder
II) durch eine Fangeinrichtung sicherstellt, dass die an der Wand herablaufende Flüssigkeit nicht in den Seitenabzug oder Sumpfabzug gelangt.

Prinzipiell kann der erfindungsgemäße Flüssigkeitssammler in sämtlichen in der thermischen Trenntechnik bekannten Trennapparaten eingesetzt werden. Bevorzugt kommt er bei Kolonnen zum Einsatz, beispielsweise Absorptions-, Desorptions- oder auch Extraktionskolonnen, insbesondere aber bei Destillations- oder Rektifikationskolonnen.

Erfindungsgemäß wird der Flüssigkeitssammler in Kolonnen eingesetzt, die mindestens ein Packungsbett aufweisen. Besonders vorteilhaft wird der erfindungsgemäße Flüssigkeitssammler bei Kolonnen eingesetzt, die mit Packungen als wesentliche Stoffaustauschelemente ausgestattet sind. Die Art und das Material der Trennelemente in dem bzw. den Packungsbetten sind für die Erfindung nicht relevant. Es kann sich dabei sowohl um Packungen aus ungeordneten Trennelementen, beispielsweise Raschigringen, Pallringen oder Keramiksätteln handeln, als auch um Packungen aus geordneten Trennelementen. Diese können beispielsweise aus Metallblechen, aus Metallgeweben oder auch aus Kunststoff oder keramischem Material gefertigt sein. Es können selbstverständlich noch weitere Einbauten in den Kolonnen vorhanden sein. Um Flüssigkeit aus einem Packungsbett lediglich zu sammeln und wieder zu verteilen, ohne sie aus der Kolonne abzuziehen, können Flüssigkeitssammler gemäß dem Stand der Technik vorhanden sein, beispielsweise Chevron-Sammler oder auch Kaminböden. Weiterhin können auch Stoffaustauschböden vorhanden sein. Eine Kolonne kann beispielsweise im oberen Teil mit einem Packungsbett und im unteren Teil mit Böden versehen sein, Packungsbetten können sich mit Böden abwechseln. Die Ausstattung einer Kolonne mit Stoffaustauschelementen hängt von der jeweiligen Trennaufgabe ab, unter anderem von den zu trennenden Fraktionen des Stoffgemisches sowie einzuhaltenden Temperatur- und Druckbereichen.

Die beiden erfindungsgemäßen alternativen Ausführungsformen I und II können bei nichtreaktiven Packungsbetten ebenso eingesetzt werden wie bei Packungsbetten, in denen chemische Reaktionen ablaufen. Finden chemische Reaktionen in der Kolonne statt, können diese in Abwesenheit eines Katalysators ablaufen, aber auch in Anwesenheit eines Katalysators, der sich in der Flüssigphase befindet oder in einem Packungsbett oder mehreren Packungsbetten enthalten ist. Der Katalysator kann sich dabei beispielsweise in Taschen geordneter Packungen oder auf der Oberfläche der Trennelemente einer oder mehrerer Packungen befinden.

Die erfindungsgemäßen Ausführungsformen des Flüssigkeitssammlers können sowohl eingesetzt werden in Kolonnen ohne Trennwände als auch in Kolonnen, die mit im Wesentlichen vertikalen Trennwänden ausgestattet sind. Dabei kann die Trennwand im mittleren Teil der Kolonne angebracht sein, sie kann sich aber auch bis zum Kopf oder bis zum Sumpf der Kolonne erstrecken. Auch bei Kolonnen mit mehreren Trennwänden kann die erfindungsgemäße Vorrichtung vorteilhaft eingesetzt werden. Wird ein Flüssigkeitssammler in einem Teil der Kolonne angebracht, der durch Kolonnenwand und mindestens eine Trennwand begrenzt ist, so berühren die Elemente der Sammeleinrichtung weder die eigentliche Kolonnenwand noch die Trennwand bzw. verläuft die Fangeinrichtung sowohl entlang der Kolonnenwand als auch der Trennwand. Ist der erfindungsgemäße Flüssigkeitssammler in einem Teil der Trennwandkolonne angebracht, in dem keine Trennwand vorhanden ist, so entsprechen die erfindungsgemäßen Lösungen denen einer Kolonne ohne Trennwand.

Bevorzugt wird der erfindungsgemäße Flüssigkeitssammler eingesetzt, um eine mittelsiedende Fraktion des zu trennenden Stoffgemisches in hoher Reinheit aus einem Seitenabzug aus der Kolonne zu entnehmen. Typischerweise wird nur ein Teil der Flüssigkeit durch den Abzug abgeführt, der restliche Teil verbleibt in der Kolonne und wird beispielsweise zu einem Flüssigkeitsverteiler geleitet.

Bei hohen Reinheitsanforderungen an ein Sumpfprodukt lässt sich der erfindungsgemäße Flüssigkeitssammler vorteilhaft verwenden, um einen Sumpfabzug aus einer Kolonne zu realisieren, die im unteren Teil mit Packungen bestückt ist. Es ist selbstverständlich auch möglich, sowohl den Seitenabzug als auch den Sumpfabzug oder mehrere Seitenabzüge mittels erfindungsgemäßer Flüssigkeitssammler zu gestalten. Dabei kann die Ausgestaltung der Flüssigkeitssammler variieren, insbesondere können sowohl die Ausführungsform I mit Wandabstand als auch die Ausführungsform II mit mindestens einer Fangeinrichtung gleichzeitig in einer Kolonne vorhanden sein.

Der erfindungsgemäße Flüssigkeitssammler enthält mindestens ein Element zum Sammeln von aus einem Packungsbett laufender Flüssigkeit. In einer ersten erfindungsgemäßen Alternative, der Ausführungsform I, sind alle Elemente der Sammeleinrichtung von der Wandung beabstandet angebracht. Unter der Wandung ist dabei zunächst die Innenwand der Kolonne zu verstehen, die den Raum begrenzt, in dem sich der Flüssigkeitssammler befindet. In vertikaler Richtung nach oben oder unten ist dieser Raum nicht beschränkt. Im Falle einer Trennwandkolonne kann die den Raum begrenzende Wandung einerseits wiederum die Innenwand der Kolonne sein, beispielsweise im Kopf und Sumpf der Trennwandkolonne, wenn sich dort keine Trennwand befindet. Andererseits kann die Wandung auch den Raum umfassen, der durch die Innenwand der Kolonne und eine oder mehrere Trennwände begrenzt ist.

Die Elemente der Sammeleinrichtung können unterschiedlich ausgestaltet sein. Im Falle des häufig eingesetzten Chevron-Sammlers (beispielhaft gezeigt in Henry Z. Kister: Distillation Operation, McGraw-Hill, 1990, S. 114/115) sind sowohl die Fangbleche als auch der Ringkanal, in den die Fangbleche ableiten, Elemente der Sammeleinrichtung im Sinne der Erfindung. Um zu gewährleisten, dass nur die Flüssigkeit aus dem Packungsbett, nicht aber die an der Wandung herablaufende Flüssigkeit aufgefangen wird, müssen sämtliche Fangbleche und der Ringkanal umlaufend einen Abstand zur Wandung aufweisen. Umlaufend bedeutet in diesem Zusammenhang, dass die Elemente der Sammeleinrichtung die Wandung an keiner Stelle berühren. Der Abstand muss dabei nicht gleichmäßig oder gleichförmig sein, die Elemente können zu einigen Stellen der Wandung einen deutlich größeren Abstand aufweisen als zu anderen Stellen.

Die Fangbleche eines Chevron-Sammlers müssen die aufgefangene Flüssigkeit nicht zwangsläufig in einen geschlossenen Ringkanal ableiten. Bei einer möglichen Ausführungsform werden die Fangbleche aus der Horizontalen zu einer Seite der Kolonne geneigt angebracht. Dabei genügt ein Kanalabschnitt in dem Segment der Kolonne, in dem die Flüssigkeit aus den Fangblechen läuft. In diesem Fall sind die Fangbleche und der Kanalabschnitt Elemente der Sammeleinrichtung im Sinne der Erfindung. Sie müssen alle einen Abstand zur Wandung aufweisen.

Die aus einem Packungsbett laufende Flüssigkeit muss nicht zur Wandung hin abgeleitet werden. Bei einer Ausführung des Flüssigkeitssammlers ähnlich einer in US 6,749,182 beschriebenen Bauform wird die Flüssigkeit in im Wesentlichen waagrechten Blechen aufgefangen und in einen Längskanal abgeleitet, der mittig von einer Seite der Kolonne zur gegenüberliegenden verläuft. In einem solchen Fall sind die im Wesentlichen waagrechten Bleche und der Längskanal als Elemente der Sammeleinrichtung zu sehen, die an keiner Stelle die Wandung berühren dürfen. Der Längskanal muss dabei nicht mittig durch die Kolonne verlaufen, er kann sich auch in einer Kolonnenhälfte befinden. Es können auch mehrere Längskanäle vorhanden sein, die symmetrisch oder unsymmetrisch zur Kolonnenmitte angeordnet sind.

Bei einer Ausgestaltung des Flüssigkeitssammlers, die den in DE 100 34 902 A1 oder DE 14 42 884 beschriebenen Bauformen ähneln, sind die fächerförmigen Fangbleche und die Einrichtung zum Ableiten der Flüssigkeit in der Kolonnenmitte als Elemente der Sammeleinrichtung zu betrachten. Während die Einrichtung zum Ableiten konstruktionsbedingt einen Abstand zur Wandung aufweist, müssen erfindungsgemäß alle Fangbleche umlaufend von der Wandung beabstandet sein.

Die genannten erfindungsgemäßen Flüssigkeitssammler können auch vorteilhaft in einer Trennwandkolonne eingesetzt werden. Die Wandung besteht in diesem Fall aus der Kolonnenwand und mindestens einer Trennwand, die im Wesentlichen senkrecht in der Kolonne angebracht ist. Je nach Bauweise des Flüssigkeitssammlers sind ein geschlossener Ringkanal, ein oder mehrere Kanalabschnitte, ein oder mehrere Längskanäle, Fangbleche vom Chevron-Typ, fächerförmige oder im Wesentlichen waagrechte Fangbleche oder sonstige Arten von Fangblechen Elemente der Sammeleinrichtung im Sinne der Erfindung.

Die Elemente der Sammeleinrichtung müssen sich in vertikaler Projektion betrachtet nicht über den gesamten Querschnitt des von der Wandung begrenzten Kolonnenabschnittes erstrecken. Es ist auch denkbar, dass die Elemente nur einen Teil der aus einem Packungsbett laufenden Flüssigkeit auffangen. Auch in einem solchen Fall müssen die Elemente erfindungsgemäß überall einen Abstand zur Wandung haben.

Der Abstand zwischen den Elementen der Sammeleinrichtung und der Wandung muss dabei mindestens so groß sein wie die größten Tropfen bzw. die Filmdicke der an der Wandung herablaufenden Flüssigkeit, um zu verhindern, dass diese Flüssigkeit in die Elemente der Sammeleinrichtung gelangt. Dieser Mindestabstand beträgt typischerweise 2 mm. Andererseits sollte der Abstand aus ökonomischen Gründen nicht zu groß sein, da sonst aus dem Packungsbett laufende Flüssigkeit von den Elementen der Sammeleinrichtung nicht aufgefangen wird. Diese Obergrenze für den Abstand zur Wandung hängt von der Kolonnengeometrie und -größe ab. Der Wandabstand beträgt üblicherweise von 2 bis 100 mm, bevorzugt von 5 bis 60 mm, besonders bevorzugt von 10 bis 30 mm. Dabei muss der Abstand nicht gleichförmig sein, sondern kann auch über die üblichen Fertigungstoleranzen hinaus variieren. Bei Ausführungsformen mit ungleichmäßigem Abstand beziehen sich diese Angaben auf den Abstand an der engsten Stelle zwischen den Elementen der Sammeleinrichtung und der begrenzenden Wandung.

Die Elemente der Sammeleinrichtung des erfindungsgemäßen Flüssigkeitssammlers können in unterschiedlicher Weise in der Kolonne angebracht sein. Sie können beispielsweise lösbar oder unlösbar mit der Kolonnenwand und/oder gegebenenfalls einer Trennwand verbunden sein. Lösbare Verbindungen lassen sich beispielsweise durch schrauben, klemmen oder keilen realisieren. Unlösbare Verbindungen entstehen z.B. durch schweißen, löten, pressen oder nieten. Dabei sind gegebenenfalls Abstandhalter vorzusehen, die gewährleisten, dass die Elemente der Sammeleinrichtung die Wandung nicht berühren. Die Elemente können auch lose auf Stützvorrichtungen aufgelegt sein. Beispielsweise kann ein Ringkanal auf mehreren Tragbalken aufliegen, die ihrerseits fest mit der Kolonnenwand verbunden sind. Wenn die Elemente der Sammeleinrichtung direkt unterhalb eines Packungsbettes angebracht werden, ist es auch denkbar, die Elemente nicht an der Kolonnenwand und/oder gegebenenfalls Trennwand zu befestigen, sondern beispielsweise an dem Tragrost, auf dem das Packungsbett aufliegt. Erfindungsgemäß soll vermieden werden, dass mittels der Befestigungselemente wandgängige Flüssigkeit in die Elemente der Sammeleinrichtung gelangt.

In einer zweiten erfindungsgemäßen Alternative, der Ausführungsform II, können die Elemente der Sammeleinrichtung des Flüssigkeitssammlers bis an die Wandung reichen. Dass keine an der Wand herablaufende Flüssigkeit in die Elemente gelangt, wird dadurch sichergestellt, dass eine Fangeinrichtung oberhalb der Elemente, zwischen Elementen oder in Elementen der Sammeleinrichtung umlaufend oder entlang eines Segmentes der Wandung angebracht ist. Diese Fangeinrichtung fängt die wandgängige Flüssigkeit auf und führt sie an den Elementen der Sammeleinrichtung vorbei.

Erfindungsgemäß ist eine oder sind mehrere Fangeinrichtungen umlaufend an der begrenzenden Wandung angebracht. Dies bedeutet, dass in der senkrechten Projektion die jeweilige Fangeinrichtung entlang des Umfangs der Wandung bevorzugt keine Lücke aufweist. Dabei muss die Fangeinrichtung nicht zwingend in sich geschlossen sein. Eine spiralenförmig an der Wandung entlang verlaufende Fangeinrichtung wird ebenso als umlaufend bezeichnet, sofern sich ihr Anfang und ihr Ende in der senkrechten Projektion überlappen.

Die Fangeinrichtung schließt im Wesentlichen flüssigkeitsdicht mit der Wandung ab. An der Wandung herablaufende Flüssigkeit kann nicht durch die Fangeinrichtung weiter nach unten laufen.

Befindet sich die Fangeinrichtung umlaufend oberhalb der Sammeleinrichtung, beispielsweise direkt unterhalb des nächstliegenden Packungsbettes, so können einige oder alle Elemente der Sammeleinrichtung die Wandung berühren. Die Fangeinrichtung führt die wandgängige Flüssigkeit an den Elementen der Sammeleinrichtung vorbei.

Besteht ein erfindungsgemäßer Flüssigkeitssammler aus einer Sammeleinrichtung mit mehreren Elementen, die in vertikaler Richtung mit einem Abstand zueinander angeordnet sind, so kann die Fangeinrichtung in vertikaler Richtung auch zwischen den Elementen der Sammeleinrichtung angebracht sein. In diesem Fall müssen die sich oberhalb der Fangeinrichtung befindenden Elemente umlaufend einen Abstand zur Wandung aufweisen, wohingegen die sich unterhalb der Fangeinrichtung befindenden Elemente die Wandung berühren dürfen.

Je nach Ausgestaltung der Elemente der Sammeleinrichtung reicht es aus, die Fangeinrichtung nur über ein Segment oder mehrere Segmente der begrenzenden Wandung anzubringen. Ein Beispiel für eine solche Ausführungsform ist ein Flüssigkeitssammler ähnlich der in US 6,749,182 beschriebenen Bauform, bei dem die im Wesentlichen waagrechten Fangbleche keinen Kontakt zur Wandung haben, der Längskanal an seinen Stirnseiten aber die Wandung berührt. In diesem Fall genügt es, jeweils eine Fangeinrichtung oberhalb der Stirnseiten des Längskanals im Wesentlichen flüssigkeitsdicht an der Wandung anzubringen und die darin aufgefangene wandgängige Flüssigkeit an dem Längskanal vorbeizuführen.

In der senkrechten Projektion betrachtet belegt die Fangeinrichtung nur einen geringen Teil der Querschnittsfläche. Die radiale Ausdehnung der Fangeinrichtung beträgt typischerweise von 5 bis 100 mm, bevorzugt von 10 bis 60 mm, besonders bevorzugt von 20 bis 40 mm. Aus einem Packungsbett laufende Flüssigkeit wird entsprechend nur zu einem geringen Anteil in der Fangeinrichtung aufgefangen. Der Großteil der Flüssigkeit aus einem Packungsbett wird von den Elementen der Sammeleinrichtung aufgenommen.

Die in dem erfindungsgemäßen Flüssigkeitssammler enthaltene Fangeinrichtung kann unterschiedlich gestaltet sein. Es kann sich dabei um einen Ringkanal oder um ein oder mehrere Kanalsegmente handeln. Das Querschnittsprofil des Kanals kann rechteckig, halbrund, u-förmig, dreieckig sein oder eine andere Querschnittsfläche aufweisen. Wichtig ist bei der Gestaltung, dass die gesamte an der Wandung herablaufende Flüssigkeit in die Fangeinrichtung gelangt, und verhindert wird, dass über Teile der Fangeinrichtung wandgängige Flüssigkeit in die Sammeleinrichtung gelangt. Selbstverständlich können, sofern der erfindungsgemäße Flüssigkeitssammler mehr als eine Fangeinrichtung umfasst, diese gleich oder aber unterschiedlich ausgestaltet sein.

Die Fangeinrichtung kann auch in die Elemente der Sammeleinrichtung des Flüssigkeitssammlers integriert sein. Ein Beispiel hierfür wird anhand des in der Praxis häufig anzutreffenden Chevron-Sammlers erläutert, der aus Fangblechen und einem Ringkanal als Elementen der Sammeleinrichtung des Flüssigkeitssammlers besteht. Sofern die Fangbleche umlaufend einen Abstand zur Wandung aufweisen, lässt sich die Fangeinrichtung dadurch realisieren, dass in dem Ringkanal umlaufend eine Trenneinrichtung, beispielsweise ein Blech, angebracht wird, das den Ringkanal in zwei Teilringkanäle teilt. Der äußere Teilringkanal, der von der Wandung und der Trenneinrichtung begrenzt ist, fungiert als Fangeinrichtung. Die Ableitung der wandgängigen Flüssigkeit kann einfach durch Löcher im Boden dieses Teilringkanals erfolgen. Der innere Teilringkanal erfüllt nach wie vor den Zweck des Sammelns der aus einem Packungsbett laufenden Flüssigkeit, die von den Fangblechen aufgefangen und in den inneren Teilringkanal geleitet wird.

Die Ausführungsform des erfindungsgemäßen Flüssigkeitssammlers mit Fangeinrichtung eignet sich besonders zum Nachrüsten von Seiten- oder Sumpfabzügen bestehender Kolonnen. Je nach Geometrie und Anordnung der Elemente der Sammeleinrichtung des Flüssigkeitssammlers ist dabei die Variante der integrierten Fangeinrichtung oder die Variante eines umlaufenden Kanals oder von Kanalsegmenten zu bevorzugen.

Gegenstand der Erfindung ist weiterhin ein Verfahren zum Abtrennen einer oder mehrerer Komponenten aus einem Stoffgemisch. Dabei wird das Stoffgemisch mindestens einer erfindungsgemäßen Kolonne zugeleitet.

Abhängig von der Zusammensetzung des zu trennenden Stoffgemisches kann die erfindungsgemäße Kolonne die Trennaufgabe alleine bewältigen oder mit anderen Kolonnen oder anderen verfahrenstechnischen Apparaten verschaltet sein. Handelt es sich beispielsweise um ein Gemisch, das in zwei leicht siedende Fraktionen, eine schwersiedende Fraktion und einen hochreinen Mittelsieder aufgetrennt werden soll, so bieten sich zwei Verschaltungsvarianten an: In der ersten Variante wird in einer ersten Kolonne die erste Leichtsiederfraktion über Kopf abgetrennt, der Rest geht über Sumpf als Zulauf zur erfindungsgemäßen Kolonne. In dieser wird die zweite leichtsiedende Fraktion über Kopf, die schwersiedende über Sumpf und der Mittelsieder über einen Seitenabzug erhalten. In der zweiten Variante ist die Verschaltung der beiden Kolonnen vertauscht. Das zu trennende Gemisch wird der erfindungsgemäßen Kolonne zugeführt, in der beide Leichtsiederfraktionen über Kopf abgetrennt werden. Die schwersiedende Fraktion erhält man am Sumpf und den Mittelsieder im Seitenabzug der erfindungsgemäßen Kolonne. Die beiden Leichtsiederfraktionen werden einer zweiten Kolonne zugeführt, wo sie über Kopf und Sumpf aufgetrennt werden.

Vorteilhaft wird eine erfindungsgemäße Kolonne in einem Verfahren eingesetzt, um ein hochreines Produkt durch einen Seitenabzug zu gewinnen. Handelt es sich bei der hochrein zu gewinnenden Komponente um einen Schwersieder, so wird das hochreine Produkt aus einem Sumpfabzug der erfindungsgemäßen Kolonne abgezogen.

Im Rahmen des Verfahrens zur Abtrennung einer oder mehrerer Komponenten aus einem Stoffgemisch kann die erfindungsgemäße Kolonne auch mit Trennwänden und/oder reaktiven Packungen ausgestattet sein.

Erfindungsgemäß sollen insbesondere Produkte hochrein aus einem Seitenabzug oder Sumpfabzug einer Packungskolonne gewonnen werden. Wann ein Produkt als hochrein charakterisiert wird, hängt unter anderem von seiner vorgesehenen Verwendung ab. Im Bereich der Lebensmittel- und Pharmaindustrie weisen hochreine Produkte typischerweise Verunreinigungen von höchstens 0,1 ppb bis 500 ppm auf. Für Chemikalien, die in der Elektronikindustrie eingesetzt werden, sind ähnliche Höchstwerte für zulässige Verunreinigungen üblich. Durch den Einsatz des erfindungsgemäßen Flüssigkeitssammlers lassen sich hierbei deutliche Verbesserungen in der Produktqualität erzielen und/oder eine hohe Produktreinheit bei verringerten Investitions- und/oder Betriebskosten realisieren.

Anhand der Zeichnungen werden einige Ausführungsbeispiele der Erfindung erläutert, ohne die Erfindung darauf zu beschränken. Es zeigen:
- Fig. 1:: einen Längsschnitt eines Kolonnenabschnittes als Ausführungsbeispiel für die Ausführungsform I eines Flüssigkeitssammlers mit beabstandeten Elementen der Sammeleinrichtung,
- Fig. 2 (a bis d):: Querschnitte verschiedener Ausführungsbeispiele für die Ausführungsform I eines Flüssigkeitssammlers mit beabstandeten Elementen der Sammeleinrichtung,
- Fig. 3 (a, b):: Querschnitte von Ausführungsbeispielen der Ausführungsform I eines Flüssigkeitssammlers mit beabstandeten Elementen der Sammeleinrichtung in einer Trennwandkolonne,
- Fig. 4:: einen Längsschnitt eines Kolonnenabschnittes als Ausführungsbeispiele der Ausführungsform II eines Flüssigkeitssammlers mit Fangeinrichtung,
- Fig. 5:: einen Längsschnitt eines Kolonnenabschnittes als alternatives Ausführungsbeispiel für die Ausführungsform II eines Flüssigkeitssammlers mit Fangeinrichtung.

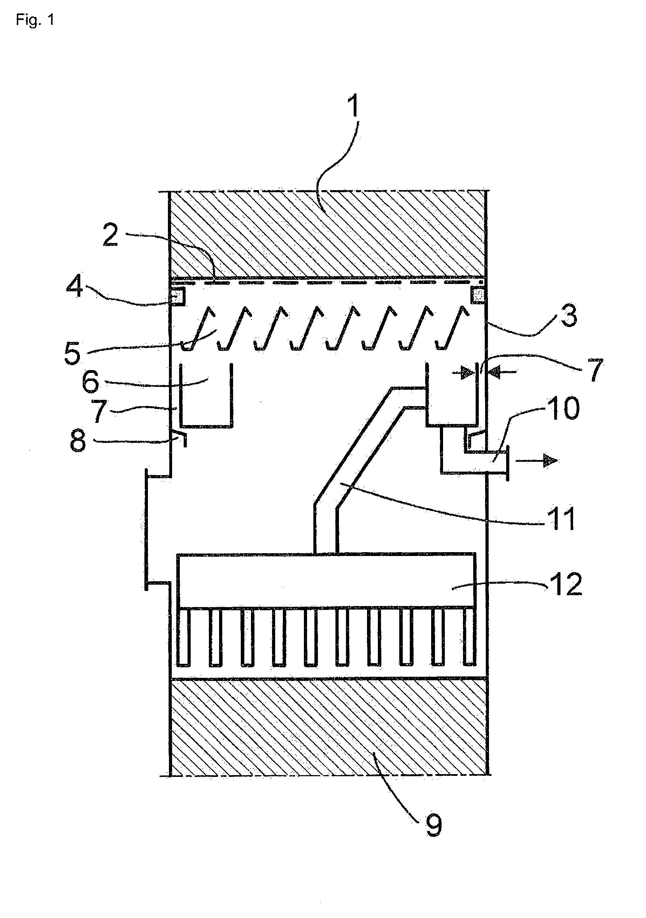

Fig. 1 zeigt einen Ausschnitt einer Kolonne im Längsschnitt. Das obere Packungsbett 1 wird gehalten von einem Tragrost 2, der auf einem mit der Kolonnenwand 3 fest verbundenen Träger 4 aufliegt. Der Träger kann in Form eines Tragringes oder mehrerer Traglaschen ausgestaltet sein. Die aus dem Packungsbett herauslaufende Flüssigkeit wird in Elementen 5 zum Sammeln von Flüssigkeit, im Beispiel vom Chevron-Typ, aufgefangen und von dort in ein weiteres Element 6 zum Sammeln von Flüssigkeit, im Beispiel einen Ringkanal, geleitet. Diese Ausführungsform weist mehrere Elemente zum Sammeln der aus dem Packungsbett laufenden Flüssigkeit auf, hier bezeichnet mit 5 und 6. Die Elemente 5 und 6 der Sammeleinrichtung weisen umlaufend einen Abstand 7 zur Kolonnenwand 3 auf, damit an der Kolonnenwand 3 herablaufende Flüssigkeit nicht in die Elemente 5 und 6 gelangt, sondern über Abweisbleche 8 auf das nachfolgende Packungs-bett 9 läuft. Die in den Elementen 5 und 6 aufgefangene Flüssigkeit wird zum Teil über einen Abzug 10 aus der Kolonne geleitet, der Rest wird über ein Ablaufrohr 11 dem Flüssigkeitsverteiler 12 zugeführt, der dafür sorgt, dass die Flüssigkeit in geeigneter Weise auf das nachfolgende Packungsbett 9 aufgegeben wird. Dadurch, dass die wandgängige Flüssigkeit an der Sammeleinrichtung vorbeigeleitet wird, erhält man im Abzug 10 eine gegenüber der herkömmlichen Vorgehensweise höhere Reinheit.

Die Fig. 1 stellt die Konfiguration für einen Seitenabzug dar. Für einen Sumpfabzug ist das Funktionsprinzip identisch, allerdings wird dann die Flüssigkeit aus dem Element 6, die nicht als Sumpfstrom abgezogen wird, nicht mehr auf ein weiteres Packungsbett verteilt, sondern wird in den Kolonnensumpf oder in einen anderen Apparat geleitet, beispielsweise den Aufkocher der Kolonne.

Die Elemente 5 und 6 können auf verschiedene Arten in ihrer Position gehalten werden. An der Kolonnenwand können sie beispielsweise lösbar durch Verschrauben oder unlösbar durch Verschweißen mit entsprechenden Abstandhaltern befestigt werden. Sie können aber auch auf an der Kolonnenwand befestigte Tragbalken oder ähnliche Stützvorrichtungen aufgelegt werden, gegebenenfalls wiederum lösbar oder unlösbar befestigt.

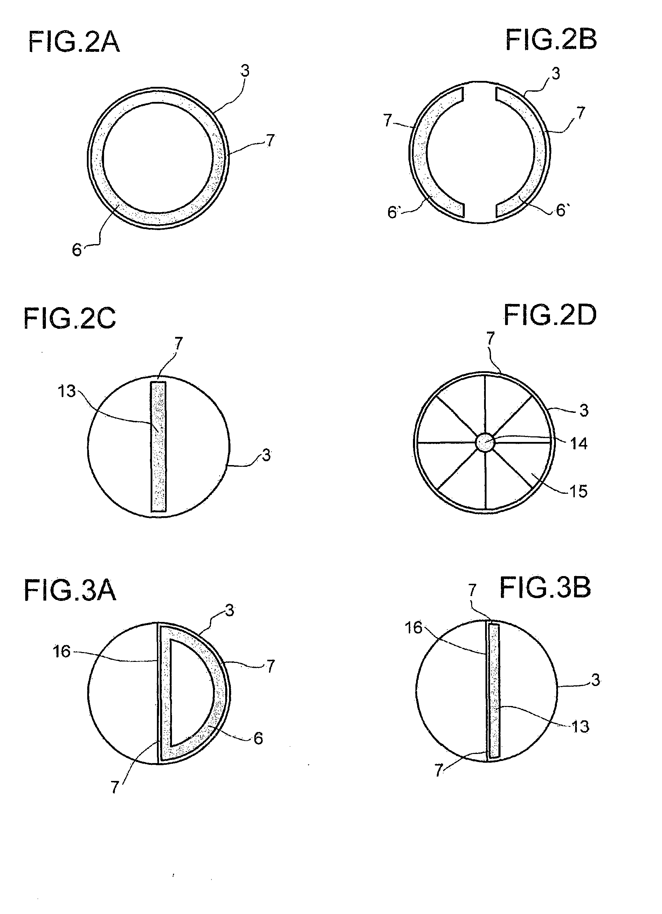

Die Fig. 2a zeigt die wesentlichen Elemente des in Fig. 1 dargestellten Ausführungsbeispiels im Querschnitt: Das Element 6 in Form eines Ringkanals weist umlaufend einen Abstand 7 zur Kolonnenwand 3 auf. Die Elemente 5, die die aus dem Packungsbett ablaufende Flüssigkeit aufnehmen und in das Element 6 ableiten, sind der Übersichtlichkeit halber in den Fig. 2 und 3 nicht abgebildet. Sie weisen allerdings ebenfalls umlaufend einen Abstand zur Kolonnenwand auf.

Das Element oder die Elemente der Sammeleinrichtung des erfindungsgemäßen Flüssigkeitssammlers müssen nicht notwendigerweise wie in Fig. 2a durchgängig über den gesamten Umfang der Kolonnenwand verlaufen, sie können auch unterbrochen sein oder aus mehreren Abschnitten bestehen wie in Fig. 2b dargestellt. Wichtiges Merkmal der Erfindung ist, dass sämtliche zum Auffangen der Flüssigkeit bestimmten Elemente - die nicht dargestellten wie die dargestellten 6' - die Kolonnenwand 3 jeweils nicht berühren.

In der Fig. 2c ist eine weitere Ausführungsform dargestellt, wie sie beispielsweise bei einem Flüssigkeitssammler des in US 6,749,182 beschriebenen Typs die erfindungsgemäße Lösung realisieren kann. Bei dieser Form wird die in den hier nicht abgebildeten Fangblechen des Flüssigkeitssammlers aufgefangene Flüssigkeit nicht in einen Ringkanal abgeleitet, sondern in einen Längskanal 13, der im Inneren des Kolonnenquerschnittes angebracht ist. Auch bei dieser Ausführungsform müssen sämtliche Elemente der Sammeleinrichtung, also der Längskanal 13, die nicht dargestellten Fangbleche sowie gegebenenfalls weitere flüssigkeitssammelnden Teile, umlaufend einen Abstand 7 zur Kolonnenwand 3 aufweisen.

Fig. 2d stellt eine mögliche Realisierung der Erfindung dar, wenn der Flüssigkeitssammler eine Bauform aufweist, wie sie z.B. in den Schriften DE 100 34 902 A1 und DE 14 42 88 beschrieben ist. In diesem Fall befindet sich ein Element der Sammeleinrichtung in Form eines Ablaufschachtes 14 in der Kolonnenmitte und hat dadurch konstruktionsbedingt keinen Kontakt zur Kolonnenwand 3. Um zu vermeiden, dass an der Wand herablaufende Flüssigkeit in den Abzug gelangt, müssen allerdings auch die weiteren Elemente der Sammeleinrichtung, nämlich die flügelförmigen Fangbleche 15, umlaufend einen Abstand 7 zur Kolonnenwand 3 haben.

Der erfindungsgemäße Flüssigkeitssammler kann auch in einer Kolonne eingesetzt werden, die mit einer oder mehreren Trennwänden ausgestattet ist. Fig. 3a zeigt eine Ausführungsform für eine Trennwandkolonne, bei der die Trennwand 16 mittig im Kolonnenquerschnitt angeordnet ist. In diesem Fall müssen die Elemente der Sammeleinrichtung, beispielsweise nicht dargestellte Fangbleche sowie der Ringkanals 6, sowohl zur Kolonnenwand 3 als auch zur Trennwand 16 einen umlaufenden Abstand 7 besitzen.

Ähnlich wie in Fig. 2b oder Fig. 2c können sich die Elemente der Sammeleinrichtung auch nur über einen Teil des Umfangs erstrecken. Fig. 3b stellt ein Beispiel dar, bei dem ein Element der Sammeleinrichtung aus einem Längskanal 13 besteht, der einen Abstand 7 zur Trennwand 16 und zur Kolonnenwand 3 besitzt. Auch die nicht dargestellten Elemente der Sammeleinrichtung, die die Flüssigkeit aus dem Packungsbett auffangen und in den Längskanal 13 ableiten, müssen einen Abstand sowohl zur Kolonnenwand 3 als auch zur Trennwand 16 aufweisen.

Besonders einfach lassen sich die bisher genannten Ausführungsformen realisieren, wenn eine Kolonne neu mit den entsprechenden Einbauten ausgestattet wird. Für die Nachrüstung von bestehenden Kolonnen, beispielsweise mit einem Ringkanal als eines der Elemente der Sammeleinrichtung, sind die im Folgenden beschriebenen Ausführungsformen besonders geeignet. Das gemeinsame Merkmal dieser Beispiele ist, dass die an der Kolonnenwand herablaufende Flüssigkeit in einer separaten Fangeinrichtung aufgefangen und an der Sammeleinrichtung vorbei geleitet wird. In den Zeichnungen ist die Fangeinrichtung in Form einer Rinne skizziert, weshalb sie im Folgenden auch als "Fangrinne" bezeichnet wird. Die Fangeinrichtung soll dadurch allerdings nicht auf die Bauform einer Rinne beschränkt werden.

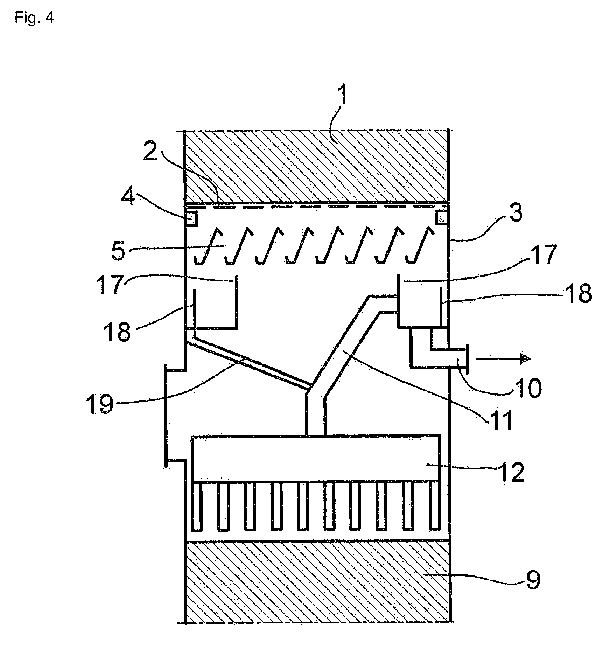

Fig. 4 stellt analog zu Fig. 1 einen Längsschnitt durch einen Kolonnenabschnitt dar. Ein Packungsbett 1 wird durch einen Tragrost 2 gehalten, der auf einem mit der Kolonnenwand 3 fest verbundenen Träger 4 aufliegt. Die aus dem Packungsbett herauslaufende Flüssigkeit wird in Elementen 5 zum Sammeln von Flüssigkeit aufgefangen und in ein weiteres Element 17 zum Sammeln von Flüssigkeit, beispielsweise einen Ringkanal, geleitet. Das Element 17 ist mit einem Trennelement 18 ausgestattet, das mit der Kolonnenwand eine umlaufende Fangrinne innerhalb des ursprünglichen Elementes zum Sammeln der Flüssigkeit bildet. Diese Fangrinne hindert die an der Kolonnenwand 3 herablaufende Flüssigkeit daran, sich mit dem Inhalt des Elementes 17 zu vermischen. Stattdessen wird sie über ein Ablaufrohr 19 dem Flüssigkeitsverteiler 12 zugeführt, ebenso wie der Teil der aufgefangenen Flüssigkeit aus dem Element 17, der nicht über einen Abzug 10 aus der Kolonne ausgeschleust wird.

Als Trennelement 18 gemäß Fig. 4 kommen verschiedene Bauformen in Betracht. Eine mögliche Realisierung besteht in dem Einschweißen eines umlaufenden, im Wesentlichen senkrecht auf der Bodenfläche des Elementes 17 stehenden Bleches. Die so entstandene Fangrinne wird mit einem Loch versehen, durch das die wandgängige Flüssigkeit abfließen kann. Zur gleichmäßigen Verteilung auf das darunter liegende Packungsbett bietet sich die Ableitung aus der Fangrinne über ein Ablaufrohr in den Flüssigkeitsverteiler an. Eine weniger aufwändige Ausführungsform besteht darin, die Flüssigkeit durch ein Loch oder mehrere Löcher über darunter liegende Abweisbleche in Richtung Kolonnenmitte abfließen zu lassen.

Auch bei nicht vollständig umlaufenden Elementen zum Sammeln der Flüssigkeit, beispielsweise analog zu den in Fig. 2b, Fig. 2c oder Fig. 3b dargestellten Konfigurationen, kann durch den Einbau von Trennelementen dafür gesorgt werden, dass an der Wand herablaufende Flüssigkeit nicht in Kontakt mit der aus dem Packungsbett laufenden Flüssigkeit kommt. Dazu werden sämtliche Elemente zum Sammeln der Flüssigkeit, die an die Kolonnenwand oder gegebenenfalls an die Trennwand grenzen, mit einer Fangrinne versehen, wie im Fall der umlaufenden Elemente beschrieben.

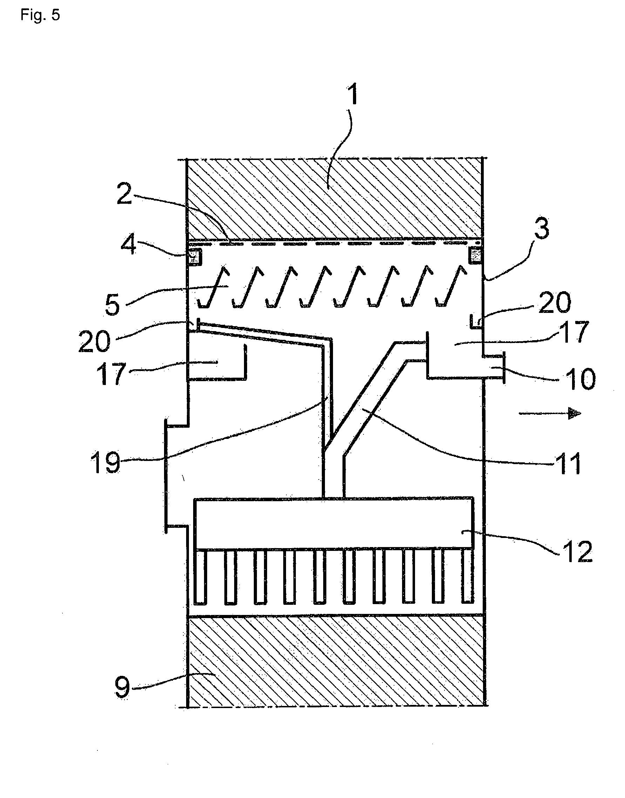

Eine weitere Alternative ist in Fig. 5 dargestellt. Bei dieser erfindungsgemäßen Variante wird die an der Kolonnenwand 3 herablaufende Flüssigkeit bereits oberhalb des Elementes 17 zum Sammeln der Flüssigkeit in einer Fangrinne 20 aufgefangen und über ein Ablaufrohr 19 an dem Element 17 vorbeigeführt. Um zu gewährleisten, dass keine wandgängige Flüssigkeit in den Abzug 10 gelangt, müssen die flüssigkeitssammelnden Elemente 5 oberhalb der Fangrinne 20 umlaufend einen Abstand zur Kolonnenwand aufweisen. Die Fangrinne 20 kann erfindungsgemäß allerdings auch beispielsweise unterhalb des Tragrostes 2 und oberhalb der Elemente 5 zum Sammeln der Flüssigkeit angebracht sein. In diesem Fall können sich die Elemente 5 auch bis zur Kolonnenwand erstrecken, da die wandgängige Flüssigkeit bereits in der Fangrinne 20 abgefangen wird, bevor sie in die Elemente 5 und 17 gelangen kann. Wichtig ist bei dieser Art von Ausführungsform, dass die Fangrinne 20 umlaufend an der Kolonnenwand 3 flüssigkeitsdicht angebracht ist, sodass verhindert wird, dass an der Kolonnenwand 3 herablaufende Flüssigkeit in die Elemente 5 oder 17 gelangt.

Im Falle der Ausführungsform gemäß Fig. 5 kann die Fangrinne 20 beispielsweise als Ringkanal flüssigkeitsdicht an die Kolonnenwand 3 angebracht werden. Hierbei ist ein Ablaufelement 19 notwendig, das die in der Fangrinne 20 gesammelte Flüssigkeit an den darunter liegenden Elementen 5 und 17 zum Sammeln der Flüssigkeit aus dem Packungsbett vorbei leitet.

Wie im Fall der Ausführungsform mit Wandabstand lässt sich auch die Ausführungsform mit Fangrinne vielfältig einsetzen, beispielsweise auch bei Trennwandkolonnen.

Mit dem erfindungsgemäßen Verfahren in seinen unterschiedlichen Ausführungsformen ist es möglich, Packungen in Kolonnen einzusetzen, bei denen die Produkte in hochreiner Form als Seitenabzug oder Sumpfabzug gewonnen werden. Wie groß der wirtschaftliche Nutzen der Erfindung ist, hängt stark von dem zu trennenden Stoffgemisch und den jeweiligen Reinheitsanforderungen an die Produkte ab. Abschließend belegt ein Beispiel eine Verbesserung in der Reinheit eines Seitenabzuges, bei dem eine Obergrenze auf den Wassergehalt spezifiziert ist.

### Beispiel:

Sofern nicht anderweitig gekennzeichnet, beziehen sich Prozent- und ppm-Angaben auf Gewichtsanteile bzw. Verhältnisse von Massenströmen.

Die folgenden Ausführungen basieren auf einer Auslegungsrechnung für eine neu zu errichtende Destillationskolonne, aus der in einem Seitenabzug ein hochreines Produkt gewonnen werden soll. Die Kolonne ist im Verstärkungsteil mit einem Packungsbett ausgestattet. Direkt unterhalb des Packungsbettes wird der Seitenstrom entnommen. Das auf diese Weise erhaltene Produkt darf nur einen bestimmten Höchstgehalt an Wasser aufweisen, um den Spezifikationen zu genügen. Eine kritische Größe bei der Auslegung dieser Kolonne ist die Wandgängigkeit, die hier definiert ist als das Verhältnis des Massenstroms der an der Kolonnenwand insgesamt herablaufenden Flüssigkeit zu dem Massenstrom des Rücklaufs auf die Kolonne. Es wird angenommen, dass sich der wandgängige Massenstrom mit dem Massenstrom aus dem Packungsbett ideal vermischt, bevor er zu einem Teil als Seitenabzug aus der Kolonne entnommen wird.

Untersuchungen an der Universität Delft (Chemical Engineering Research & Design, Vol. 84, Issue A10, Oct. 2006, S. 867-874) ergaben für zwei unterschiedliche Packungen der Firma Montz (Montz Pak B1-250 und Montz Pak B1-250M) Randgängigkeiten bis maximal 3,8 % bzw. 2,4 %, abhängig von der gas- und flüssigseitigen Belastung der Kolonne.

Für die Berechnungen wird angenommen, dass der Rücklauf auf die Kolonne 580 ppm Wasser enthält. Es werden zwei Szenarien betrachtet:
a) Die aus dem Packungsbett laufende Flüssigkeit hat einen Wassergehalt von 10 ppm, der max. zulässige Wassergehalt im Seitenabzug beträgt 20 ppm oder 50 ppm.
b) Die aus dem Packungsbett laufende Flüssigkeit hat einen Wassergehalt von 20 ppm, der max. zulässige Wassergehalt im Seitenabzug beträgt 30 ppm oder 50 ppm.

In Tab. 1 sind die Ergebnisse für das Szenario (a) angegeben. Bei einem angenommenen Wassergehalt am unteren Ende des Packungsbettes von 10 ppm ergibt sich für die Packung Montz Pak B1-250 ein Wassergehalt im Seitenabzug von 31,7 ppm. Für die Packung Montz Pak B1-250M liegt dieser Wert bei 23,7 ppm. Durch den Einsatz eines erfindungsgemäßen Flüssigkeitssammlers, der die wandgängige Flüssigkeit daran hindert, sich mit der aus dem Packungsbett stammenden Flüssigkeit zu vermischen, lässt sich der Wassergehalt im Seitenabzug auf 10,0 ppm reduzieren. Die Spezifikation von maximal 20 ppm im Produkt kann in diesem Beispiel nur mit dem erfindungsgemäßen Flüssigkeitssammler erfüllt werden. Eine Spezifikation von 50 ppm wäre hingegen auch mit herkömmlichen Einrichtungen zu erreichen.

Tab. 2 gibt die entsprechenden Resultate für das Szenario (b) wieder. Auch in diesem Fall ergibt sich durch den Einsatz eines erfindungsgemäßen Flüssigkeitssammlers eine deutliche Verbesserung der Produktqualität.

**Tab. 1**

| | | |
|---|---|---|
| Wassergehalt Rücklauf | 580,0 ppm | |
| Wassergehalt Packungsbett | 10,0 ppm | |
| Montz Pak B1-250 | 31,7 ppm | |
| Montz Pak B1-250M | 23,7 ppm | |
| Erfindung | 10,0 ppm | |
| Obergrenze Seitenabzug | 20,0 ppm | 50,0 ppm |
| Max. zul. Wandgängigkeit | 1,75 % | 7,02 % |

**Tab. 2**

| | | |
|---|---|---|
| Wassergehalt Rücklauf | 580,0 ppm | |
| Wassergehalt Packungsbett | 20,0 ppm | |
| Montz Pak B1-250 | 41,3 ppm | |
| Montz Pak B1-250M | 33,4 ppm | |
| Erfindung | 20,0 ppm | |
| Obergrenze Seitenabzug | 30,0 ppm | 50,0 ppm |
| Max. zul. Wandgängigkeit | 1,79 % | 5,36 % |

## Patentansprüche

1. Flüssigkeitssammler zum Einsatz in einer Kolonne, die mindestens ein Packungsbett enthält, umfassend
- eine Sammeleinrichtung zum Sammeln der aus dem Packungsbett laufenden Flüssigkeit und
- mindestens einen Abzug aus der Kolonne,
**dadurch gekennzeichnet, dass** alle Elemente der Sammeleinrichtung von der Kolonnenwand oder der Kolonnenwand und mindestens einer in der Kolonne befindlichen Trennwand beabstandet sind, sodass an der Wandung herablaufende Flüssigkeit nicht in den Abzug des Flüssigkeitssammlers gelangt, wobei die Elemente mittels Abstandhaltern mit der Kolonnenwand und/oder gegebenenfalls Trennwand verbunden sind, die Elemente lose auf Stützvorrichtungen aufgelegt sind, und/oder die Elemente an einem Tragrost des oberhalb der Elemente befindlichen Packungsbettes befestigt sind.

2. Flüssigkeitssammler zum Einsatz in einer Kolonne, die mindestens ein Packungsbett enthält, umfassend
- eine Sammeleinrichtung zum Sammeln der aus dem Packungsbett laufenden Flüssigkeit und
- mindestens einen Abzug aus der Kolonne,
**dadurch gekennzeichnet, dass** mindestens eine Fangeinrichtung oberhalb der Elemente, zwischen Elementen oder in Elementen der Sammeleinrichtung umlaufend oder entlang eines Segmentes der begrenzenden Wandung angebracht ist, sodass an der Wandung herablaufende Flüssigkeit in der Fangeinrichtung aufgefangen und an der Sammeleinrichtung vorbei geführt wird.

3. Flüssigkeitssammler nach Anspruch 2 **dadurch gekennzeichnet, dass** es sich bei mindestens einer Fangeinrichtung um einen Kanal handelt, der sich über den gesamten Umfang der begrenzenden Wandung oder über ein Segment der begrenzenden Wandung erstreckt.

4. Flüssigkeitssammler nach Anspruch 2 oder 3 **dadurch gekennzeichnet, dass** mindestens eine Fangeinrichtung unterhalb eines Packungsbettes und oberhalb aller Elemente der Sammeleinrichtung angebracht ist.

5. Flüssigkeitssammler nach Anspruch 2 oder 3 **dadurch gekennzeichnet, dass** mindestens eine Fangeinrichtung in vertikaler Richtung betrachtet zwischen Elementen der Sammeleinrichtung angebracht ist, und dass die sich oberhalb der mindestens einen Fangeinrichtung befindenden Elemente der Sammeleinrichtung einen Abstand zur begrenzenden Wandung aufweisen.

6. Flüssigkeitssammler nach Anspruch 3 **dadurch gekennzeichnet, dass** mindestens eine Fangeinrichtung In ein Element der Sammeleinrichtung integriert ist.

7. Kolonne zur Trennung von Stoffgemischen enthaltend mindestens ein Packungsbett **dadurch gekennzeichnet, dass** sie weiterhin mindestens einen Flüssigkeitssammler gemäß einem der Ansprüche 1 bis 6 enthält.

8. Kolonne nach Anspruch 7 **dadurch gekennzeichnet, dass** es sich bei mindestens einem der Packungsbetten um ein reaktives Packungsbett handelt, das den Ablauf von chemischen Reaktionen der Komponenten des Stoffgemisches ermöglicht oder beeinflusst.

9. Kolonne nach Anspruch 7 oder 8 **dadurch gekennzeichnet, dass** die Kolonne mindestens eine im Wesentlichen vertikale Trennwand aufweist.

10. Kolonne nach Anspruch 9 **dadurch gekennzeichnet, dass** mindestens ein Element der Sammeleinrichtung und/oder eine Fangeinrichtung eines Flüssigkeitssammlers in einem Teil der Kolonne angebracht ist, der nicht durch eine Trennwand begrenzt ist.

11. Kolonne nach Anspruch 9 **dadurch gekennzeichnet, dass** mindestens ein Element der Sammeleinrichtung und/oder eine Fangeinrichtung eines Flüssigkeitssammlers in einem durch Kolonnenwand und mindestens einer Trennwand begrenzten Teil der Kolonne angebracht ist.

12. Verfahren zum Abtrennen einer oder mehrerer Komponenten aus einem Stoffgemisch **dadurch gekennzeichnet, dass** man das Stoffgemisch mindestens einer Kolonne gemäß einem der Ansprüche 7 bis 11 zur Abtrennung zuleitet.

13. Verfahren nach Anspruch 12 **dadurch gekennzeichnet, dass** aus mindestens einer der Kolonnen gemäß einem der Ansprüche 7 bis 11 ein hochreines Produkt als Seitenabzug gewonnen wird.

14. Verfahren nach Anspruch 12 **dadurch gekennzeichnet, dass** aus mindestens einer der Kolonnen gemäß einem der Ansprüche 7 bis 11 ein hochreines Produkt als Sumpfabzug gewonnen wird.

## Claims

1. A liquid collector for use in a column comprising at least one bed of packing, comprising
- a collecting device for collecting the liquid running from the bed of packing and
- at least one offtake from the column,
wherein all elements of the collecting device are at a distance from the column wall or the column wall and at least one dividing wall present in the column so that liquid running down along the wall does not reach the offtake from the liquid collector, where the elements are joined by means of spacers to the column wall and/or optionally dividing wall, the elements are loosely laid on support devices and/or the elements are fastened to a support grating of the bed of packing located above the elements.

2. A liquid collector for use in a column comprising at least one bed of packing, comprising
- a collecting device for collecting the liquid running from the bed of packing and
- at least one offtake from the column,
wherein at least one diversion device is installed above the elements, between elements or in elements of the collecting device either circumferentially or along a segment of the bounding wall so that liquid running down along the wall is collected in the diversion device and conducted past the collecting device.

3. The liquid collector according to claim 2, wherein at least one diversion device is a channel which extends over the entire circumference of the bounding wall or over a segment of the bounding wall.

4. The liquid collector according to claim 2 or 3, wherein at least one diversion device is installed below one bed of packing and above all elements of the collecting device.

5. The liquid collector according to claim 2 or 3, wherein at least one diversion device is, viewed in the vertical direction, installed between elements of the collecting device and the elements of the collecting device located above the at least one diversion device are at a distance from the bounding wall.

6. The liquid collector according to claim 3, wherein at least one diversion device is integrated into an element of the collecting device.

7. A column for the separation of mixtures, comprising at least one bed of packing, wherein it further comprises at least one liquid collector according to any of claims 1 to 6.

8. The column according to claim 7, wherein at least one of the beds of packing is a reactive bed of packing which makes it possible for chemical reactions between the components of the mixture to occur or influences such reactions.

9. The column according to claim 7 or 8, wherein the column has at least one essentially vertical dividing wall.

10. The column according to claim 9, wherein at least one element of the collecting device and/or a diversion device of a liquid collector is installed in a part of the column which is not bounded by a dividing wall.

11. The column according to claim 9, wherein at least one element of the collecting device and/or a diversion device of a liquid collector is installed in a part of the column which is bounded by the column wall and at least one dividing wall.

12. A method of separating off one or more components from a mixture, wherein the mixture is fed into at least one column according to any of claims 7 to 11 for separation.

13. The method according to claim 12, wherein a highly pure product is isolated as side offtake stream from at least one of the columns according to any of claims 7 to 11.

14. The method according to claim 12, wherein a highly pure product is isolated as bottom offtake stream from at least one of the columns according to any of claims 7 to 11.

## Revendications

1. Collecteur de liquide destiné à être utilisé dans une colonne, qui contient au moins un lit de garnissage, comprenant :
- un dispositif de recueillement pour le recueillement du liquide s'écoulant du lit de garnissage et
- au moins une sortie de la colonne,
**caractérisé en ce que** tous les éléments du dispositif de recueillement sont espacés de la paroi de la colonne ou de la paroi de la colonne et d'au moins une paroi de séparation se trouvant dans la colonne, de manière à ce que le liquide s'écoulant sur la paroi n'atteigne pas la sortie du collecteur de liquide, les éléments étant reliés par des espaceurs avec la paroi de la colonne et/ou éventuellement une paroi de séparation, les éléments étant disposés de manière lâche sur des dispositifs supports et/ou les éléments étant fixés sur une grille support du lit de garnissage se trouvant au-dessus des éléments.

2. Collecteur de liquide destiné à être utilisé dans une colonne, qui contient au moins un lit de garnissage, comprenant :
- un dispositif de recueillement pour le recueillement du liquide s'écoulant du lit de garnissage et
- au moins une sortie de la colonne,
**caractérisé en ce qu'**au moins un dispositif de piégeage est disposé au-dessus des éléments, entre des éléments ou dans des éléments du dispositif de recueillement autour ou le long d'un segment de la paroi de délimitation, de manière à ce que le liquide s'écoulant sur la paroi soit piégé dans le dispositif de piégeage et évite le dispositif de recueillement.

3. Collecteur de liquide selon la revendication 2, **caractérisé en ce qu'**au moins un dispositif de piégeage est un canal qui s'étend sur l'ensemble de la périphérie de la paroi de délimitation ou sur un segment de la paroi de délimitation.

4. Collecteur de liquide selon la revendication 2 ou 3, **caractérisé en ce qu'**au moins un dispositif de piégeage est disposé en dessous d'un lit de garnissage et au-dessus de tous les éléments du dispositif de recueillement.

5. Collecteur de liquide selon la revendication 2 ou 3, **caractérisé en ce qu'**au moins un dispositif de piégeage est disposé dans la direction verticale entre des éléments du dispositif de recueillement et **en ce que** les éléments du dispositif de recueillement se trouvant au-dessus du ou des dispositifs de piégeage présentent une distance par rapport à la paroi de délimitation.

6. Collecteur de liquide selon la revendication 3, **caractérisé en ce qu'**au moins un dispositif de piégeage est intégré dans un élément du dispositif de recueillement.

7. Colonne pour la séparation de mélange de substances contenant au moins un lit de garnissage, **caractérisée en ce qu'**elle contient également au moins un collecteur de liquide selon l'une quelconque des revendications 1 à 6.

8. Colonne selon la revendication 7, **caractérisée en ce qu'**au moins un des lits de garnissage est un lit de garnissage réactif, qui permet ou influence le déroulement de réactions chimiques des composants du mélange de substances.

9. Colonne selon la revendication 7 ou 8, **caractérisée en ce que** la colonne comprend au moins une paroi de séparation essentiellement verticale.

10. Colonne selon la revendication 9, **caractérisée en ce qu'**au moins un élément du dispositif de recueillement et/ou un dispositif de piégeage d'un collecteur de liquide est disposé dans une partie de la colonne qui n'est pas délimitée par une paroi de séparation.

11. Colonne selon la revendication 9, **caractérisée en ce qu'**au moins un élément du dispositif de recueillement et/ou un dispositif de piégeage d'un collecteur de liquide est disposé dans une partie de la colonne délimitée par la paroi de la colonne et au moins une paroi de séparation.

12. Procédé de séparation d'un ou de plusieurs composants d'un mélange de substances, **caractérisé en ce que** le mélange de substances est conduit dans au moins une colonne selon l'une quelconque des revendications 7 à 11 pour la séparation.

13. Procédé selon la revendication 12, **caractérisé en ce qu'**un produit hautement pur est obtenu en tant que sortie latérale à partir d'au moins une des colonnes selon l'une quelconque des revendications 7 à 11.

14. Procédé selon la revendication 12, **caractérisé en ce qu'**un produit hautement pur est obtenu en tant que sortie de fond à partir d'au moins une des colonnes selon l'une quelconque des revendications 7 à 11.
